# EUROPÄISCHE PATENTSCHRIFT

(11) **EP 3 625 873 B1**
(45) Veröffentlichungstag und Bekanntmachung des Hinweises auf die Patenterteilung: **28.08.2024**
(21) Anmeldenummer: 18734454.4
(22) Anmeldetag: 12.06.2018
(51) Int. Cl.: H02K 1/18, H02K 5/04

(54) **STATOR-GEHÄUSE-EINHEIT FÜR EINE ELEKTRISCHE MASCHINE**
STATOR-HOUSING UNIT FOR AN ELECTRIC MACHINE
UNITÉ DE BOÎTIER/STATOR POUR UNE MACHINE ÉLECTRIQUE

(30) Priorität: 06.07.2017 EP 17180018
(43) Veröffentlichungstag der Anmeldung: 25.03.2020
(73) Patentinhaber: Siemens Aktiengesellschaft, 80333 München (DE)
(72) Erfinder: HAUN, Dominik, 97688 Bad Kissingen (DE); KESSLER, Winfried, 97647 Hausen (DE)
(74) Vertreter: Siemens Patent Attorneys
(86) Internationale Anmeldenummer: PCT/EP2018/065517
(87) Internationale Veröffentlichungsnummer: WO 2019/007646

(56) Entgegenhaltungen:
- DE-A1- 102009 001 942
- DE-A1- 102014 221 872
- DE-A1- 102015 213 753
- JP-A- 2011 152 041

## Beschreibung

Die Erfindung betrifft eine Stator-Gehäuse-Einheit für eine elektrische Maschine, wobei ein Stator mit einem Gehäuse verbunden ist.

Um einen Stator einer elektrischen Maschine in einem dafür vorgesehenen Gehäuse zu befestigen, muss sichergestellt werden, dass ein von einem Rotor der elektrischen Maschine herrührendes Drehmoment vom Stator auf das Gehäuse übertragbar ist. Ein Drehen des Rotors wirkt sich prinzipiell auf den Stator aus, weshalb dieser, um ein Mitdrehen des Stators mit dem Rotor zu verhindern, kraftschlüssig mit dem Gehäuse verbunden sein muss.

Die DE 10 2014 221 427 A1 betrifft eine Vorrichtung zur Befestigung eines Stators in einem Gehäuse, mit einem Gehäuse und einem in dem Gehäuse angeordneten Stator, wobei das Gehäuse an seinem Umfang zumindest eine Einbuchtung zur Befestigung des Stators am Gehäuse aufweist. Am Umfang des Stators ist zumindest eine Nut vorgesehen, in die die Einbuchtung des Gehäuses hineinragt.

Um den Stator auf diese Weise im Gehäuse zu befestigen ist jedoch eine Wandstärkendicke des Gehäuses nötig, die eine kompakte Bauweise der elektrischen Maschine erschwert macht.

Diesen Nachteil hat auch ein anderes Verfahren nach dem Stand der Technik, bei welchem der Stator in das Gehäuse eingepresst wird. Hierbei sind hohe Einpresskräfte erforderlich. Daher muss die Wandstärkendicke des Gehäuses eine gewisse Dicke aufweisen, damit während des Einpressens keine Risse auftreten. Zudem können sich während des Einpressens metallische Späne lösen, die im ungünstigsten Fall zu einer Schädigung der elektrischen Maschine führen.

Wird der Stator in einem alternativen Verfahren in das Gehäuse geklebt, muss diese Klebung mittels Wärme verfestigt werden. Hierfür sind jedoch ein weiterer zeitraubender Arbeitsschritt sowie ein kostspieliger Ofen nötig.

Die WO 2009 077 088 A2 beschreibt ein Verfahren zum Herstellen einer Stator-Gehäuse-Einheit für eine elektrische Maschine, wobei ein Stator mit einem Gehäuse verbunden wird. Vor dem Verbinden wird wenigstens eine Teilfläche der gemeinsamen Kontaktflächen mit einem Lackmaterial beschichtet.

Die JP 2011 152 041 A offenbart:
Stator-Gehäuse-Einheit für eine elektrische Maschine, wobei
ein Stator mit einem Gehäuse verbunden ist, wobei auf einer Kontaktfläche zwischen dem Stator und dem Gehäuse eine Gestaltabweichung zur Erhöhung eines Reibkoeffizienten zwischen Stator und Gehäuse ausgeführt ist, wobei die Gestaltabweichung zur Ermöglichung einer sowohl kraftschlüssigen als auch formschlüssigen Verbindung des Stators mit dem Gehäuse [dient].

Aus der DE 10 2014 221 872 A1 ist eine Vorrichtung zur Befestigung eines Stators einer elektrischen Maschine in einem Gehäuse bekannt, mit einem Gehäuse und einem in dem Gehäuse (1) befestigten Stator, der am Umfang zumindest eine Ausnehmung aufweist, in der ein Einlegeteil zur Verbindung des Gehäuses mit dem Stator vorgesehen ist, wobei das Einlegeteil mit dem Gehäuse stoffschlüssig verbunden ist.

Die DE 10 2009 001 942 A1 betrifft ein Gehäuse einer elektrischen Maschine, welches mittels eines Fließpressverfahrens hergestellt ist, wobei das Gehäuse mit einem Boden versehen ist, welcher mit einer Lageraufnahme versehen ist und ein Lagerschild bildet. Der Erfindung liegt die Aufgabe zugrunde, eine elektrische Maschine kompakt und schnell zu bauen.

Die Lösung der Aufgabe gelingt durch eine Stator-Gehäuse-Einheit für eine elektrische Maschine mit den im Anspruch 1 angegebenen Merkmalen. Dabei ist ein Stator mit einem Gehäuse verbunden, wobei auf wenigstens einer Teilfläche einer Kontaktfläche zwischen dem Stator und dem Gehäuse eine Gestaltabweichung zur Erhöhung eines Reibkoeffizienten zwischen Stator und Gehäuse ausgeführt ist.

Zudem gelingt die Lösung der Aufgabe durch eine elektrische Maschine mit einer derartigen Stator-Gehäuse-Einheit.

Ferner wird die Aufgabe gelöst durch ein Verfahren zum Herstellen einer derartigen Stator-Gehäuse-Einheit für eine elektrische Maschine, gemäss Anspruch 7, wobei ein Stator mit einem Gehäuse verbunden wird und wobei vor einem Verbinden wenigstens eine Teilfläche einer Kontaktfläche zwischen Stator und Gehäuse mit einer Gestaltabweichung zur Erhöhung eines Reibkoeffizienten zwischen Stator und Gehäuse versehen wird.

Die Erfindung eignet sich besonders gut für elektrische Maschinen, insbesondere für Elektromotoren. Besonders Servomotoren, die oft in einer kompakten Bauweise gefertigt sein müssen, profitieren von einer erfindungsgemäßen Ausführung der Stator-Gehäuse-Einheit.

In einer erfindungsgemässen Variante ist die Gestaltabweichung als eine Rändelung ausgeführt. Vorteilhaft ist die Teilfläche der Kontaktfläche zwischen Stator und Gehäuse auf einer zum Gehäuse zeigenden Oberfläche des Stators ausgeführt. Dies bietet den Vorteil, dass bei einem Zusammenfügen von Stator und Gehäuse eine eventuelle Verformung des Stators vermieden wird.

Rändelungen sind Gestaltabweichungen, die in einen vorzugsweise metallenen Gegenstand eingeprägt, gefräst und/oder gedrückt werden. Der metallene Gegenstand wird dadurch aufgeraut und somit griffiger. Rändelungen können bei umlaufenden Rotationskörpern auf einer Drehmaschine besonders gut eingeprägt werden.

Vorteilhaft eignet sich für die Rändelung eines Stators, der mit einem Gehäuse verbunden werden soll, ein Rändel mit achsparallelen Riefen, da ein Statorjoch des Stators vorzugsweise in axialer Richtung in das Gehäuse eingefügt wird. Besonders gut eigen sich ein Rändel nach DIN 82-RAA 0,5, also eine Rändelung mit achsparallelen Riefen und einer Teilung von 0,5 mm. Jedoch können auch andere Rändelarten eingesetzt werden.

Zudem sind erfindungsgemäss auch andere Formen von Rauheit als Gestaltabweichung zur Erhöhung des Reibkoeffizienten zwischen Stator und Gehäuse möglich, die durch Ätzen oder Sandstrahlen hervorgerufen werden können.

Die Rändelung ermöglicht eine sowohl kraftschlüssige als auch formschlüssige Verbindung des Stators mit dem Gehäuse. Dadurch kann das vom Rotor auf den Stator wirkende Drehmoment auf das Gehäuse übertragen werden, sodass bei drehendem Rotor der Stator und das Gehäuse ruhen.

Erfindungsgemäß ist die Teilfläche an einem Ende des Stators ausgeführt, der an einen Lagerschild, insbesondere einen Lagerschild an einer B-Seite der elektrischen Maschine, grenzt. Dies bietet den Vorteil, dass bei einem Einfügen bzw. Pressen des Statorjochs in das Gehäuse nur wenig Kraft aufgebracht werden muss. Es ist genau eine mit einer Rändelung versehene Teilfläche an einem Ende des Stators ausgeführt, der an einen Lagerschild grenzt.

Erfindungsgemäss beträgt die Teilfläche, die eine Gestaltabweichung zur Erhöhung eines Reibkoeffizienten aufweist, 10% bis 30% der Kontaktfläche und ist ringsum den Stator ausgeführt. Eine Rändelung der gesamten Kontaktfläche würde nämlich mehr Zeit in Anspruch nehmen als eine Rändelung der Teilfläche und hierbei würde beim Zusammenfügen von Stator und Gehäuse zudem mehr Kraft benötigt, so dass eine Rändelung von nur 10% bis 30% der Kontaktfläche von Vorteil ist.

Die Rändelung der Teilfläche ermöglicht, dass mittels reduzierter Pressung das Gehäuse auf den Stator bzw. der Stator in das Gehäuse geschoben werden kann, um Stator und Gehäuse kraft- und formschlüssig zu verbinden. Ein benötigter Kraftaufwand ist verringert. Zudem lösen sich durch die reduzierte Pressung weniger oder sogar keine metallischen Späne, weshalb die Gefahr einer Schädigung der elektrischen Maschine durch diese abnimmt. Zudem ist eine Wand des Gehäuses mit einer geringeren Wandstärke ausführbar, da aufgrund einer geringeren Presskraft die Wand nicht Gefahr läuft zu reißen.

In einer beispielhaften Ausführung kann eine ursprünglich 3,6 mm dicke Wand des Gehäuses unter Einbeziehung der genannten Erfindung mit einer Dicke von nur noch 2,5 mm gefertigt werden. Somit können elektrische Maschinen, die die erfindungsgemäße Rändelung des Stators aufweisen, in einer kompakten Bauweise bezüglich Höhe und Breite gefertigt werden.

Da dadurch auch weniger Material für das Gehäuse aufgewendet werden muss, können Kosten eingespart werden. Aufgrund einer guten Wärmeleitfähigkeit wird vorzugsweise Aluminium als Material für das Gehäuse verwendet.

Besonders gut eignet sich die Erfindung für Dreh-, Fräs- und Produktionsmaschinen mit einem Drehmoment von 1,2 Nm bis 50 Nm.

Die erfindungsgemäße Rändelung ermöglicht eine sichere Verbindung von Stator und Gehäuse, sodass auf eine Verwendung eines Klebstoffs verzichtet werden kann. Zudem kann mittels der Rändelung einer erforderlichen Entformungsschräge in einem Gussprozess entgegengewirkt werden, um eine ausreichende Pressverbindung zu erzielen.

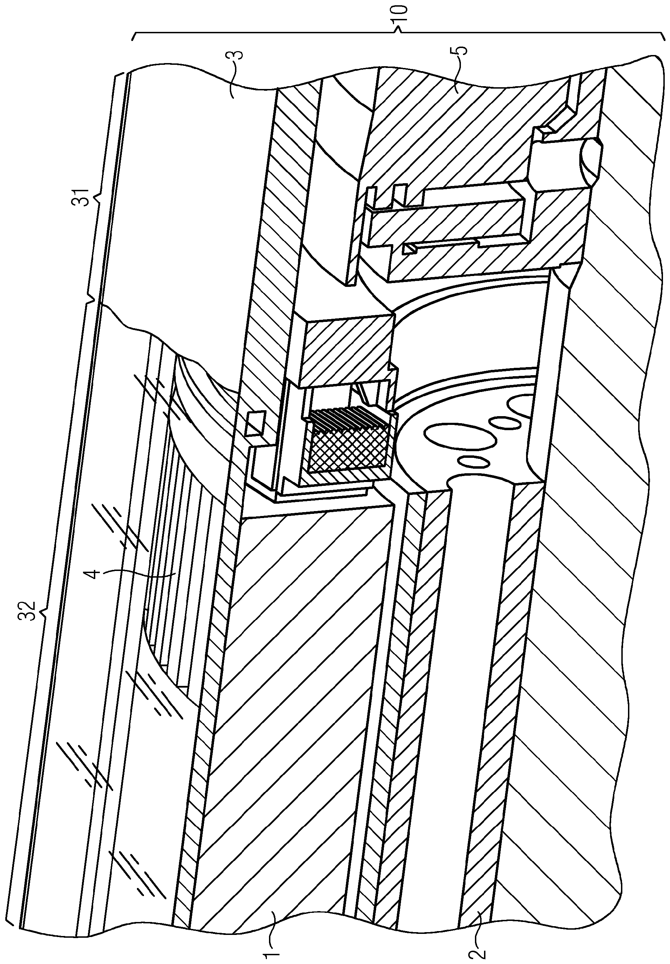

Die Erfindung wird anhand eines in der Figur dargestellten Querschnitts einer beispielhaften elektrischen Maschine erläutert.

Die Figur zeigt einen Querschnitt einer elektrischen Maschine 10, die einen Stator 1 und einen Rotor 2 umfasst. Im rechten Bereich 31 der elektrischen Maschine 10 ist ein Gehäuse 3 zu erkennen, welches im linken Bereich 32 der Figur durchaus vorhanden, aber transparent dargestellt ist. Aufgrund einer Transparenz des Gehäuses 3 kann eine als Rändelung 4 ausgeführte Gestaltabweichung zur Erhöhung eines Reibkoeffizienten zwischen Stator 1 und Gehäuse 3 auf dem Stator 1 erkannt werden.

Die Rändelung 4 nimmt eine Teilfläche einer Kontaktfläche zwischen Stator 1 und Gehäuse 3 ein und ist auf einer dem Gehäuse 3 zugewandten Oberfläche des Stators 1 ausgeführt. Die Figur zeigt, dass genau ein Teilbereich gerändelt ist. Die Rändelung 4 ist als Rändel mit achsparallelen Riefen ausgeführt und ermöglicht eine kraft- und formschlüssige Verbindung des Stators 1 mit dem Gehäuse 3.

Die Rändelung 4 ist an einem Ende - an einer sogenannten B-Seite der elektrischen Maschine - des Stators 1 ausgeführt, welches an einen Lagerschild 5 grenzt. Erfindungsgemäß beträgt die mit der Rändelung 4 versehene Teilfläche 10% bis 30% der gesamten Kontaktfläche zwischen Stator 1 und Gehäuse 3. Die Figur zeigt zudem, dass die Rändelung 4 ringsum den Stator 1 ausgeführt ist.

## Patentansprüche

1. Stator-Gehäuse-Einheit für eine elektrische Maschine (10), wobei ein Stator (1) mit einem Gehäuse (3) verbunden ist, wobei auf einer Teilfläche einer Kontaktfläche zwischen dem Stator (1) und dem Gehäuse (3) eine Gestaltabweichung zur Erhöhung eines Reibkoeffizienten zwischen Stator (1) und Gehäuse (3) ausgeführt ist, wobei die Gestalt der Teilfläche von der Gestalt des übrigen Teils der Kontaktfläche abweicht und wobei die Teilfläche an einem Ende des Stators (1) ausgeführt ist, der an einen Lagerschild (5) grenzt, wobei die Gestaltabweichung als eine Rändelung (4) oder durch Ätzen oder Sandstrahlen ausgeführt ist zur Ermöglichung einer sowohl kraftschlüssigen als auch formschlüssigen Verbindung des Stators (1) mit dem Gehäuse (3), wobei die Teilfläche 10% bis 30% der Kontaktfläche beträgt und ringsum den Stator (1) ausgeführt ist.

2. Stator-Gehäuse-Einheit nach Anspruch 1, wobei die Rändelung (4) auf dem Stator (1) ausgeführt ist.

3. Stator-Gehäuse-Einheit nach einem der Ansprüche 1 oder 2, wobei die Rändelung als ein Rändel mit achsparallelen Riefen ausgeführt ist.

4. Stator-Gehäuse-Einheit nach einem der vorhergehenden Ansprüche, wobei der Stator (1) und das Gehäuse (3) formschlüssig miteinander ohne eine Verwendung von Klebstoff verbunden sind.

5. Elektrische Maschine (10) mit einer Stator-Gehäuse-Einheit nach einem der Ansprüche 1 bis 4.

6. Elektrische Maschine (10) nach Anspruch 5 ausgebildet als Servomotor.

7. Verfahren zum Herstellen einer Stator-Gehäuse-Einheit für eine elektrische Maschine (10) nach einem der Ansprüche 1 bis 4, wobei der Stator (1) mit dem Gehäuse (3) verbunden wird, wobei vor einem Verbinden die Teilfläche der Kontaktfläche zwischen Stator (1) und Gehäuse (3) mit einer Gestaltabweichung zur Erhöhung des Reibkoeffizienten zwischen Stator (1) und Gehäuse (3) versehen wird, wobei die Gestaltabweichung als eine Rändelung (4) oder durch Ätzen oder Sandstrahlen ausgeführt wird zur Ermöglichung einer sowohl kraftschlüssigen als auch formschlüssigen Verbindung des Stators (1) mit dem Gehäuse (3).

## Claims

1. Stator-housing unit for an electric machine (10), wherein a stator (1) is connected to a housing (3),
wherein a deviation in shape for increasing a coefficient of friction between the stator (1) and the housing (3) is realised on a subarea of a contact area between the stator (1) and the housing (3), wherein the shape of the subarea deviates from the shape of the remaining part of the contact area and wherein the subarea is realised at one end of the stator (1), which borders a bearing shield (5), wherein the deviation in shape is embodied as a knurling (4) or by etching or sandblasting in order to enable both a force-fit and also form-fit connection of the stator (1) to the housing (3), wherein the subarea amounts to 10% to 30% of the contact area and is realised all around the stator (1).

2. Stator-housing unit according to claim 1, wherein the knurling (4) is realised on the stator (1).

3. Stator-housing unit according to one of claims 1 or 2, wherein the knurling is realised as a knurl with paraxial rills.

4. Stator-housing unit according to one of the preceding claims, wherein the stator (1) and the housing (3) are connected to one another in a form-fit manner without using adhesive.

5. Electric machine (10) having a stator-housing unit (5) according to one of claims 1 to 4.

6. Electric machine (10) according to claim 5 embodied as a servomotor.

7. Method for producing a stator-housing unit for an electric machine (10) according to one of claims 1 to 4,
wherein the stator (1) is connected to the housing (3), wherein prior to connection the subarea of the contact area between the stator (1) and the housing (3) is provided with a deviation in shape in order to increase a coefficient of friction between the stator (1) and the housing (3), wherein the deviation in shape is realised as a knurling (4) or by etching or sand-blasting in order to enable both a force-fit and also form-fit connection of the stator (1) to the housing (3).

## Revendications

1. Unité de stator-carcasse pour une machine (10) électrique, dans laquelle un stator (1) est assemblé à une carcasse (3), dans laquelle, sur une surface partielle d'une surface de contact entre le stator (1) et la carcasse (3), est réalisé un écart de forme pour augmenter un coefficient de frottement entre le stator (1) et la carcasse (3), dans laquelle la forme de la surface partielle s'écarte de la forme de la partie restante de la surface de contact et dans laquelle la surface partielle est réalisée à une extrémité du stator (1), qui est voisine d'un flasque (5), dans laquelle l'écart de forme est réalisé sous la forme d'un moletage (4) ou par attaque chimique ou par sablage pour rendre possible un assemblage tant à coopération de force qu'à complémentarité de forme du stator (1) à la carcasse (3), dans laquelle la surface partielle représente de 10% à 30% de la surface de contact et réalisée autour du stator (1).

2. Unité de stator-carcasse suivant la revendication 1, dans laquelle le moletage (4) est réalisé sur le stator (1).

3. Unité de stator-carcasse suivant l'une des revendications 1 ou 2, dans laquelle le moletage est réalisé sous la forme d'un moletage à rainures parallèles à l'axe.

4. Unité de stator-carcasse suivant l'une des revendications précédentes, dans laquelle le stator (1) et la carcasse (3) sont assemblés l'un à l'autre à complémentarité de forme sans utiliser de colle.

5. Machine (10) électrique comprenant une unité de stator-carcasse suivant l'une des revendications 1 à 4.

6. Machine (10) électrique suivant la revendication 5, constituée en servomoteur.

7. Procédé de fabrication d'une unité de stator-carcasse pour une machine (10) électrique suivant l'une des revendications 1 à 4, dans lequel on assemble le stator (1) à la carcasse (3), dans lequel avant un assemblage, on donne à la surface partielle de la surface de contact entre le stator (1) et la carcasse (3) un écart de forme pour augmenter le coefficient de frottement entre le stator (1) et la carcasse (3), dans lequel on réalise l'écart de forme sous la forme d'un moletage (4) ou par attaque chimique ou par sablage, pour rendre possible un assemblage tant à coopération de force qu'également à complémentarité de forme du stator (1) à la carcasse (3).
